# EUROPÄISCHE PATENTSCHRIFT

(11) **EP 2 696 331 B1**
(45) Veröffentlichungstag und Bekanntmachung des Hinweises auf die Patenterteilung: **11.01.2017**
(21) Anmeldenummer: 12005698.1
(22) Anmeldetag: 06.08.2012
(51) Int. Cl.: G08B 5/22, A47C 1/13, H04B 10/11

(54) **Verfahren und System zur voll-oder halbautomatisch ferngesteuerten Adressierung von mindestens einem Objektfeld**
Method and system for completely or semi-automatic remote controlled addressing of at least one object field
Procédé et système d'adressage télécommandé totalement ou semi-automatisé d'au moins un champ d'objet

(43) Veröffentlichungstag der Anmeldung: 12.02.2014
(73) Patentinhaber: Brunner GmbH, 77866 Rheinau-Freistett (DE)
(72) Erfinder: BRUNNER, Marc, 76530 Baden-Baden (DE)
(74) Vertreter: Thämer, Wolfgang

(56) Entgegenhaltungen:
- DE-A1-102009 004 360
- DE-U1-202009 001 075

## Beschreibung

Die Erfindung betrifft ein Verfahren und ein System zur vollautomatischen und/oder halbautomatischen Adressierung von in einem oder mehreren Objektfeldern aufstellbaren und nummerierbaren Objekten. Die Objektfelder bestehen aus einer oder mehreren Objektreihen. Jede Objektreihe umfasst mindestens ein Objekt.

Aus der DE 10 2005 054 398 A1 ist ein System zur Nummerierung von in einem Feld zusammengefassten Stühlen bzw. Sitzplätzen bekannt. Alle reihenweise nebeneinander angeordneten Stühle sind elektrisch aneinander gekuppelt. Der jeweils erste oder letzte Stuhl einer jeden Reihe trägt eine Mastereinheit, die für den Vorgang der Nummerierung drahtlos mittels eines Computers oder einer Fernbedienung programmiert wird.

Der vorliegenden Erfindung liegt die Problemstellung zugrunde, ein Verfahren und ein System zur voll- und/oder halbautomatisch fernsteuerbaren Adressierung bzw. Nummerierung von in mindestens einem Objektfeld neben- und hintereinander angeordneten Objekten zu entwickeln, bei dem einzelne Objekte oder Objektgruppen drahtlos untereinander in Verbindung stehen. Diese Problemstellung wird mit den Merkmalen des Verfahrensanspruchs 1 gelöst. Dabei weist jedes Objekt - zum Empfang und zur Darstellung einer Objektplatznummer oder anderer Informationen und zur Weitergabe einer berechneten Objektplatznummer oder anderer Informationen - mindestens eine Anzeigeeinheit, mindestens eine Rechen- und Auswerteeinheit, mindestens eine Stromversorgung, mindestens zwei Kurzdistanzsender und mindestens zwei Kurzdistanzempfänger auf. Alternativ zu Letzteren können auch zwei drahtgestützte Adapter verwendet werden. Jede Objektreihe umfasst mindestens ein Feldnetzmodul. Jedes Feldnetzmodul weist mindestens eine Rechen- und Auswerteeinheit, mindestens eine Stromversorgung sowie mindestens eine Großdistanzsende- und -empfangseinrichtung auf. Im oder in der Nähe des oder der Objektfelder ist mindestens ein einem Feldnetzmodul vergleichbares Basisnetzmodul angeordnet, das direkt oder über ein Netzwerk an einen mit mindestens einem Monitor und mindestens einer Eingabeeinrichtung ausgestatteten Rechner über mindestens eine drahtlose oder kabelgestützte Datenschnittstelle verbunden ist oder in Letzterem, dem Rechner, - zumindest teilweise - integriert ist. Jedes Feldnetzmodul erkennt nach einem Systemstart zumindest einen Teil seiner benachbarten Feldnetzmodule - einschließlich dem oder der Basisnetzmodule - mittels der Großdistanzsende- und -empfangseinrichtung individuell. Jedes Netzmodul ermittelt zu jedem eindeutig erkannten Feldnetz- und/oder Basisnetzmodul zumindest den räumlichen Abstand und dessen Richtung. Die Kennung des jeweiligen Netzmoduls wird zusammen mit der entsprechenden Abstands- und Richtungsinformation als Rücklaufinformation mittels der Großdistanzsende- und - empfangseinrichtung an alle anderen unmittelbar erreichbaren Feldnetzmodule und/oder das oder die Basisnetzmodule übertragen. Die Feldnetzmodule übertragen innerhalb einer vorgebbaren Zeitspanne ihre Rücklaufinformationen an das oder die Basisnetzmodule. Im Rechner wird aus den Rücklaufinformationen ein manuell editierbarer Felderplan erstellt, in dem allen Objekten Reihen- und Platznummern zugewiesen werden. Die zugewiesenen Reihen- und Platznummern oder die diesen zugewiesenen andere Informationen sowie Reihen- und/oder Platzbezeichnungen werden mittels der Großdistanzsende- und -empfangseinrichtung von der oder den Basisnetzstationen aus an die Feldnetzmodule übertragen, um dort entweder mittels der Kurzdistanzsender und - empfänger oder der drahtgestützten Adapter an die Anzeigeeinheiten der Objekte der Objektreihen übermittelt zu werden.

Der Vorrichtungsanspruch 2 gibt die für das Verfahren erforderlichen Mittel an.

Das Verfahren bzw. das System wird beispielsweise für eine Hallenbestuhlung benutzt. In der entsprechenden Halle werden die Stühle kurzzeitig, z.B. für eine bestimmte Veranstaltung, aufgestellt, um danach wieder weggeräumt und verstaut zu werden. Die Hallenbestuhlung stellt ein zumindest annähernd zweidimensionales Stühlefeld dar, wobei trotz der Bezeichnung "zweidimensional" das Stühlefeld nicht zwingend nur auf einem durchgängig ebenen Hallenboden aufgestellt sein muss. Innerhalb eines Stühlefeldes stehen die einzelnen Stühle nur beispielhaft auf einem Rechteckraster. Jede Reihe des Stühlefeldes darf eine unterschiedliche Stuhlanzahl haben. Auch dürfen die Stuhlreihen versetzt hintereinander angeordnet sein, so dass sie zum Beispiel "auf Lücke" stehen.

Alle Stühle sind mit mindestens einer elektronischen Baugruppe ausgestattet. Diese Baugruppe verfügt über Mittel, mit deren Hilfe die Stühle drahtgestützt oder drahtlos innerhalb einer Stuhlreihe miteinander zumindest bezüglich ihrer Nummerierung kommunizieren können. Bei einer drahtlosen Kommunikation sind die Stühle über Kurzdistanzsende- und -empfangseinrichtungen miteinander verbunden. Diese Einrichtungen enthalten z.B. Infrarotschnittstellen. Bei einer drahtgestützten Kommunikation hat jeder Stuhl in der Regel pro Stuhlseite einen Adapter z.B. in Form eines Steck- oder Schiebekontaktes. Letzterer hat z.B. mehrere elektrisch leitfähige Kontaktzungen. Über einen Teil der Kontaktzungen kann auch die Versorgungsspannung geleitet werden, so dass nicht jeder Stuhl eine eigene Stromversorgung benötigt. Nebeneinander stehende Stühle sind über diese drahtgestützten Adapter mechanisch und elektrisch miteinander verbunden, wobei die Adapter zugleich Teile einer sogenannten Reihenverbindung und/oder Paniksicherung sein können.

Zur Organisation der Stuhl- bzw. Sitzplatznummern wird in jeder Stuhlreihe mindestens ein Feldnetzmodul platziert, das über mindestens ein Basisnetzmodul mit einem, zum Beispiel von einem Hallenwart, bedienbaren Rechner in Verbindung steht. Die Netzmodule kommunizieren mit Hilfe von Großdistanzsende- und - empfangseinrichtungen. Letztere arbeiten z.B. mit einer regulären Funktechnik im 2,4 GHz-Bereich.

Die Netzmodule erkennen sich einzeln oder gruppenweise untereinander. Mit ihren individuellen Kennungen und ihren gegenseitigen Abständen und Himmelsrichtungen melden sie sich beim Rechner des Hallenwarts. Dort werden die eingehenden Informationen, z.B. in Form eines Hallenplanes, ausgewertet, ggf. korrigiert und als Steuerinformation - zur Sitzplatz- und Reihennummerierung - an alle Stühle und/oder andere optische Anzeigen der Objekte zurückübertragen. An jeden Sitzplatz kann neben oder auch anstatt der Reihen- und Sitzplatznummer eine andere Information in Form einer individuellen Reihen- und/oder Sitzplatzbezeichnung übermittelt werden. So können z.B. bei einer Bestuhlung für eine Unternehmensversammlung die einzelnen Reihen Abteilungsnamen und die einzelnen Sitzplätze Personennamen tragen.

Die nummerierbaren Objekte können auch andere Möbel wie Tische, Betten und Schränke sein. Sie können ferner abgestellte Container, Maschinenkisten oder Fahrzeuge aller Art sein. Als weitere nummerierbare Objekte sind auch Spielfiguren oder andere Spieleteile denkbar, wie sie z.B. in Freizeitparks verwendet werden.

Weitere Einzelheiten der Erfindung ergeben sich aus den Unteransprüchen und der nachfolgenden Beschreibung einer schematisch dargestellten Ausführungsform.
- Figur 1:: Objektfeld mit zwei Objektreihen aus Stühlen;
- Figur 2:: Anordnung der stuhlseitigen Systembaugruppen am Sitz eines Stuhles mit einem Feldnetzmodul und/oder einem Reihenendmodul;
- Figur 3:: Vereinfachte Darstellung der räumlichen Anordnung der Netzmodule des Objektfeldes nach Figur 1, wobei die Zahlen neben den die Netzmodule verbindenden Linien Entfernungsangaben sind;
- Figur 4:: Aufgereihte Anordnung der korrespondierenden Netzwerkpaare;
- Figur 5:: Nach Entfernungsangaben sortierte Verbindungsstrecken zwischen korrespondierenden Netzwerkpaaren.

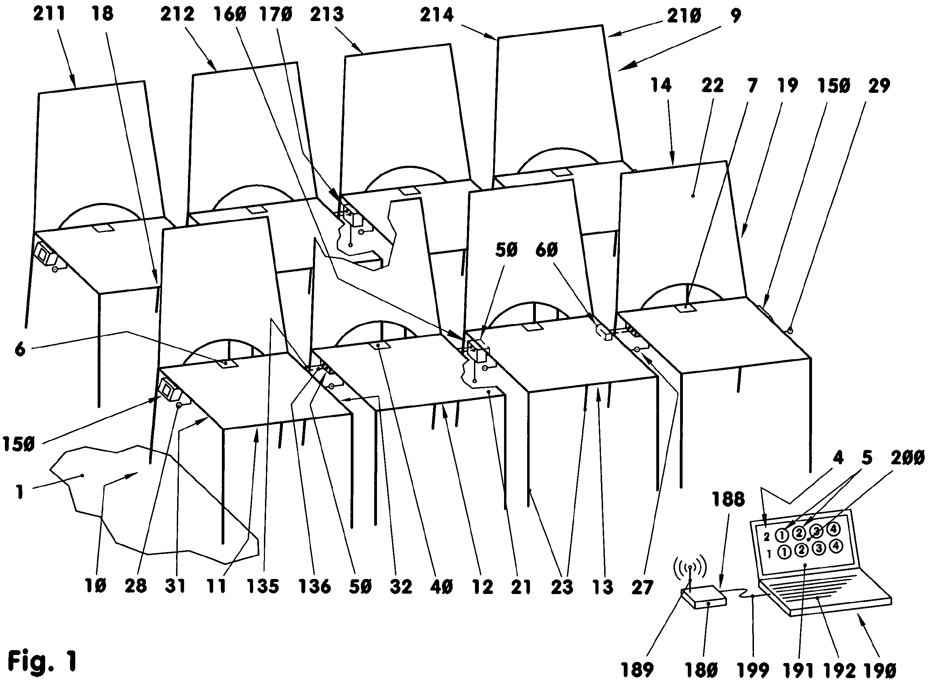

In Figur 1 wird ein aus zwei Objektreihen (10, 210) bestehendes Feld (9) dargestellt. Jede Objektreihe (10, 210) weist jeweils vier Objekte (11-14, 211-214) auf. Alle Objekte sind hier Stühle (11-14, 211-214). Pro Objektreihe (10, 210) gibt es einen Stuhl (13, 213) mit einem Feldnetzmodul (160). An den Reihenendstühlen (11, 211; 14, 214) sind an den - bezogen auf das Objektfeld (9) - außen liegenden Stuhlseiten (31, 32) jeweils Reihenendmodule (150) angeordnet. Beispielsweise vor dem Objektfeld (9) befindet sich ein Rechner (190) mit einem angeschlossenen Basisnetzmodul (180). Auf dem Bildschirm (191) des Rechners (190) wird mit Hilfe einer Felderdarstellungssoftware das oder die Objektfelder (9) mit ihren Objekten (11 - 14; 211 - 214) graphisch als Felderplan (200) vereinfacht bzw. symbolisch dargestellt. Die räumliche Verteilung der Objekte wird aus Rücklaufinformationen der Netzmodule (160 - 180) ermittelt.

Innerhalb einer Reihe stehen die Stühle (11-14, 211-214) z.B. in einem zumindest annähernd gleichen Abstand nebeneinander. Der Abstand von mechanisch nicht gekuppelten Stühlen hat eine Toleranz von. z.B. ± 5 cm.

Die benachbarten Stühle, nach Figur 1, sind beispielsweise jeweils mittels einer lösbaren mechanischen Kupplung (27, 28) so miteinander verriegelt, dass sich keiner der Stühle aus der verketteten Reihe beim Hin- und Herrücken der Stuhlreihe lösen kann. Selbst bei einem kurzzeitigen Anheben einzelner Stühle öffnet sich die Stuhlreihe nicht. Auch die Reihenendstühle (11, 14; (211, 214) kuppeln nicht ab. Die Verbindungen zwischen den Stühlen lösen sich selbst dann nicht, wenn die einzelne Stuhlreihe (10, 210), z.B. bei einer Massenpanik, nach vorn oder hinten umgeworfen wird.

Trotz der mechanischen Kupplung (27), deren Kuppelelemente (28, 29) beispielsweise auf dem Niveau der Sitzhöhe angeordnet sind, sind sie in der Stuhlaufstellebene oder - fläche z.B. um ±5 Winkelgrade gegeneinander verschwenkbar.

Werden, z.B. in einer Halle, mehr als 50 bis 100 Sitzplätze benötigt, werden die Stühle oft auf mehrere Felder verteilt. Zwischen den Feldern liegen dann in der Regel einzelne Gänge, deren Breite z.B. im Bereich von 2 bis 10 Meter variieren kann. Die Felderdarstellungssoftware erfasst diese Gänge als auswertbare Feldgrenzen, so dass in der Endphase des Nummerierungs- bzw. Adressierungsverfahrens die einzelnen Felder (9) auf dem Monitor (191) des Rechners (190) gegeneinander abgesetzt darstellbar sind.

Der einzelne, hier nur schematisch dargestellte Stuhl (11-14, 211-214) hat eine z.B. auf vier Stuhlbeinen (23) ruhende Sitzfläche (21), an die sich hinten eine Rückenlehne (22) anschließt. Im Ausführungsbeispiel ist in der Sitzfläche (21) eine von oben lesbare Anzeigevorrichtung (40) angeordnet. Sie sitzt z.B. mittig am hinteren Rand der Sitzfläche (21). Selbstverständlich kann die Anzeigevorrichtung (40) auch an der Stuhllehne (22) oder am Stuhlgestell bzw. Stuhlrahmen befestigt oder integriert sein.

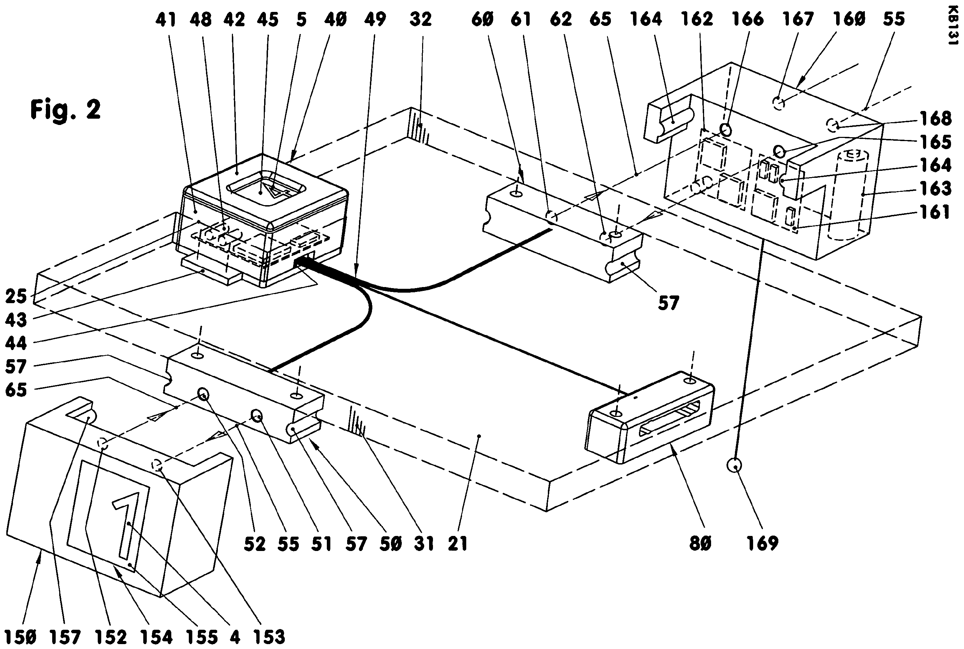

Beispielsweise ist unterhalb der Sitzfläche (21) pro Stuhlseite (31, 32) jeweils eine Sende- und Empfangseinheit (50, 60) angeordnet, vgl. Figur 2. Jede Sende- und Empfangseinheit (50, 60) hat einen optischen Sender (51, 61) und einen optischen Empfänger (52, 62). Die optischen Hauptachsen der Sender (51, 61) und der Empfänger (52, 62) liegen im Ausführungsbeispiel wechselweise auf zwei parallelen, ggf. auch unstetig gekrümmten Bahnen, die in Figur 2 als ein vorwärts laufender Signallichtstrahl (55) und ein zurücklaufender Signallichtstrahl (65) dargestellt sind. Die Sende- und Empfangseinheiten (50, 60) der benachbarten Stühle (11-14) liegen sich einander zugewandt nahezu direkt gegenüber.

In Figur 2 werden die stuhlseitigen Elemente der elektronischen Sitzplatzadressierung an einer vereinfacht als ebene Platte dargestellten Sitzfläche (21) gezeigt. Die z.B. zentrale Einheit ist hier die Anzeigevorrichtung (40), an der eine Stromversorgung (80) - mit z.B. eingelegtem Akkumulator - und die beiden Kurzdistanzsende- und -empfangseinheiten (50, 60) elektrisch angeschlossen sind.

Die Anzeigevorrichtung (40) hat z.B. ein mit einer Deckelblende (42) teilverschließbares Gehäuse (41), in dem ein Teil der stuhlseitigen Elektronik - in Form einer Rechen- und Auswerteeinheit (48) - und ein Display (45) angeordnet sind. Im unteren Bereich des Gehäuses (41) ist z.B. beidseits je eine seitlich abstehende Flanschplatte (43) vorhanden, über die das in einer Aussparung (25) sitzende Gehäuse (41), z.B. durch Tackern, an der Sitzfläche (21) befestigt wird. Das Gehäuse (41) hat im vorderen Bereich eine schlitzartige Öffnung (44), aus der ein z.B. achtadriges Flachkabel (49) herausführt. Jeweils drei Adern des bereichsweise aufgetrennten Flachkabels (49) führen zu den Sende- und Empfangseinheiten (50, 60), während z.B. die mittleren beiden Adern mit der Stromversorgung (80) elektrisch verbunden sind.

Direkt unter der Deckelblende (42) sitzt das z.B. zwei- oder dreistellige LCD-Display (45) im Gehäuse (41). Hinter dem transparent ausgeführten Display (45) ist eine bestrombare Folie angeordnet. Diese Folie, die in den Figuren nicht dargestellt ist, stellt eine z.B. zentral einschaltbare aktive Hintergrundbeleuchtung des Displays dar. Anstelle des LCD-Displays ist auch ein OLED-Display oder ein LED-Display denkbar.

Anstelle der aktiven Hintergrundbeleuchtung kann auch eine fluoreszierende Folie angeordnet werden. Diese selbstleuchtende Folie kann auch durch eine fluoreszierende Beschichtung der Displayrückseite ersetzt werden. Die Folie oder Beschichtung wird durch die Bestrahlung mit Tageslicht oder über das Licht einer entsprechenden Hallenbeleuchtung aufgeladen. Bei Dunkelheit gibt die Folie die dabei gespeicherte Energie als Hintergrundbeleuchtung ab, so dass die Sitzplatznummerierung - trotz abgedimmter Hallenbeleuchtung - noch über viele Stunden ohne zusätzlichen Stromverbrauch gut erkennbar ist.

Bei der Montage der Anzeigevorrichtung (40) wird die Deckelblende (42) nach der Aufbringung der Sitzpolsterung mit dem Gehäuse (41) verrastet. Der Rand der Deckelblende (42) überdeckt somit die Polsterbefestigungsstellen.

Selbstverständlich kann das Display (45) auch als separates, flachbauendes Einzelteil, z.B. in die Polsterung der Sitzfläche, der Rückenlehne, oder einer Armlehne an beispielsweise gut sichtbaren Stellen eingebaut bzw. eingenäht werden.
Es ist auch möglich, die Anzeigevorrichtung (40) zusätzlich oder teilweise auch alternativ an den Rückenlehnen eines jeden Stuhles anzubringen, sodass z.B. die Sitzplatznummer des vierten Stuhles der zweiten Reihe an der Rückseite der vierten Stuhles der ersten Reihe angezeigt wird.

Die einzelne Kurzdistanzsende- und -empfangseinheit (50, 60) besteht aus einem Gehäuse und dem darin angeordneten optischen IR-Sender (51, 61) und IR-Empfänger (52, 62). Ggf. können der IR-Sender und der IR-Empfänger einer Kurzdistanzsende- und - empfangseinheit (50, 60) in einem Elektronikbaustein vereint sein. In den Kurzdistanzsende- und -empfangseinheiten (50, 60) sitzt jeweils vor den IR-Empfängern z.B. ein Spektralfilter, der nur Licht oberhalb der Wellenlänge von 800 Nanometer ins Gehäuse hineinlässt.

Die Kurzdistanzsende- und Empfangseinheiten (50, 60) mit ihren Sendern (51, 61) und den Empfängern (52, 62) sowie Sender (152, 165, 167) und Empfänger (153, 166, 168) der Module (150 - 170) sind hier zum Teil paarweise kombinierte Infrarot-Transceiver, die z.B. nach einem IrDA-Standard im Infrarotbereich seriell Daten übertragen. Als serieller Port kann z.B. auch eine RS-232-Schnittstelle verwendet werden. Der einzelne Infrarot-Transceiver umfasst eine Infrarot-Sendediode (51, 61, 152, 165, 167) z.B. mit Treiberelektronik sowie einen Infrarotempfänger (52, 62, 153, 166, 168) mit einer Filterschaltung. Die hier verwendeten Dioden benutzen z.B. eine Wellenlänge von 950 nm, die weit oberhalb der Wellenlänge von sichtbarem Licht liegt. Dadurch wird die Störanfälligkeit durch ungewollte Falschlichtbeeinflussung gegenüber üblichen Infrarot-Transceivern deutlich verringert.

Die stuhlseitigen optischen Sender (51, 61) haben bei der Variante nach den Figuren 1 und 2 eine Reichweite von maximal einer halben Stuhlbreite. Als Stuhlbreite wird hier der lichte Abstand zwischen dem linken Kupplungsteil (28) und dem rechten Kupplungsteil (29) eines Stuhles (11-14, 211-214) bezeichnet. Der Abstrahlwinkel der optischen Sender (51, 61) beträgt ca. 30 Winkelgrade.

Jede Kurzdistanzsende- und -empfangseinheit (50, 60) hat z.B. seitlich, bezogen auf die Orientierung einer Stuhlsitzfläche (21) vorn und hinten, eine Halbrundnut (57), um ein Feldnetzmodul (160) oder ein Reihenendmodul (150) verliersicher adaptieren zu können. Die Module (150, 160) haben jeweils zwei Halbrundstege (157, 164), um z.B. formschlüssig am Gehäuse der jeweiligen Kurzdistanzsende- und -empfangseinheit (50, 60) lagerbar zu sein.

In Figur 2 sind die Module (150, 160, 170) jeweils - zur Erleichterung ihrer Darstellbarkeit - in Strahlengangrichtung (55, 65) versetzt vor den entsprechenden Kurzdistanzsende- und -empfangseinheit (50, 60) gezeigt. Selbstverständlich sind sie beim realen Objekt so montiert, dass sich die - die Öffnungen der jeweils einander gegenüber liegenden Kurzdistanzsender und -empfänger (51, 153; 152, 52; 61, 166; 165, 62) umgebenden - gegenseitigen Gehäusebereiche zumindest bereichsweise kontaktieren oder wenigstens nur wenige Millimeter voneinander entfernt sind, vgl. Figur 1.

Jedes Modul (150, 160, 170) kann sowohl an einer linken (31) und/oder einer rechten Stuhlseite (32) adaptiert werden. Es ist auch möglich, auf nur einer Stuhlseite (31, 32) zwischen der Kurzdistanzsende- und -empfangseinheit (50, 60) und dem Reihenendmodul (150) ein Feldnetzmodul (160) einzustecken. Ggf. kann das Feldnetzmodul (160) auch im Reihenendmodul (150) integriert sein.

Die Stromversorgung (80), vgl. Figur 2, umfasst ein Gehäuse, das eine Batterie, z.B. vom Typ Mignon AA, oder einen entsprechenden Akkumulator aufnimmt. Ggf. ist die Stromversorgung (80) auch in der Anzeigevorrichtung (40) untergebracht.

Vor der Kurzdistanzsende- und -empfangseinheit (60) befindet sich ein Feldnetzmodul (160), das mittels seiner gehäuseseitigen Stege (164) in den Nuten (57) der Kurzdistanzsende- und - empfangseinheit (60) gelagert ist. Das hier z.B. quaderförmig gestaltete Gehäuse nimmt neben zwei Kurzdistanz-IR-Sendern (165, 167) und zwei Kurzdistanz-IR-Empfängern (166, 168) eine Großdistanzsende- und -empfangseinrichtung (161) auf. An Letzterer ist eine z.B. nach unten abstehende Funkantenne (169) angeschlossen. In den Figuren sind die Antennen (169) nur symbolisch dargestellt. Die realen Antennen sind z.B. ausklappbare Stabantennen, die am Gehäuse der Großdistanzsende- und -empfangseinrichtung (161) befestigt sind. Sie können aber auch Drahtantennen sein, die in den jeweiligen Stuhlsitzflächen (21) oder den Rückenlehnen (22) aller Stühle integriert sind und erst beim Andocken des Feldnetzmoduls (160, 170) an die Kurzdistanzsende- und - empfangseinheit (50, 60) automatisch oder manuell angeschlossen werden. Auch können Teile des Stuhlgestells eine Antennenfunktion übernehmen. Ggf. können auch miniaturisierte Antennen, wie z.B. SMD-Antennen, verwendet werden.

Des Weiteren nimmt das Feldnetzmodul (160, 170) eine Rechen- und Auswerteeinheit (162) auf. Die gesamte modulseitige Elektronik (161, 162) wird von einer z.B. integrierten Stromversorgung (163) gespeist. Letztere besteht mindestens aus einer Batterie oder mindestens einem Akkumulator. Zusätzlich hierzu kann die Stromversorgung auch ein stromerzeugendes Bauteil umfassen, das z.B. aus der Wärmeabgabe oder der Bewegung des Sitzenden elektrische Energie erzeugt.

Die Kurzdistanzempfänger (166, 168) sind über die Rechen- und Auswerteeinheit (162) mit den Kurzdistanzsendern (165, 167) verknüpft. Je nach Betriebsart des Feldnetzmoduls (160, 170) gibt der Empfänger (166) die empfangenen Signale direkt oder ggf. verstärkt an den gegenüberliegenden Sender (167) weiter. Vergleichbar verfahren die Sensoren (168, 165). Anstatt des Durchleitens der IR-Signale durch das Feldmetzmodul können von dessen Rechen- und Auswerteeinheit (162) aus zudem Signale in die Kurzdistanzsender (165, 167) zur Weitergabe an benachbarte Objekte (11 - 14, 211 - 214) eingespeist werden.

In der Figur 2 ist ein Reihenendmodul (150) dargestellt. Das Reihenendmodul (150) lagert in einem Gehäuse einer Anzeigevorrichtung (154) mit einem ggf. hintergrundbeleuchteten Display (155), eine Rechen- und Auswerteeinheit, einen rückseitig am Gehäuse positionierten optischen Kurzdistanzsender (152), einen daneben angeordneten optischen Kurzdistanzempfänger (153) und eine integrierte Stromversorgung in Form einer Batterie oder eines Akkumulators.

Die Rechen- und Auswerteeinheit des Reihenendmoduls (150) entspricht der Rechen- und Auswerteeinheit (48) der stuhlseitigen Anzeigevorrichtung (40). Demnach besteht der wesentliche Unterschied zwischen dem Reihenendmodul (150) und der stuhlseitigen Anzeigevorrichtung (40) darin, statt einer Sitzplatznummer (5) eine Reihennummer (4) anzuzeigen.

Zum Anbringen des Reihenendmoduls (150) wird dieses an der entsprechenden Stuhlseite (31), vgl. Figur 1, mit Handkraft auf die Kurzdistanzsende- und -empfangseinheit (50, 60) aufgeschoben.

Ggf. kann die Übertragung der Information der stuhlseitigen Sende- und Empfangseinheit (50, 60) an das jeweilige Reihenendmodul (150) auch über elektrische Kontakte realisiert werden.

In Figur 2 sind nur beispielhaft alle stuhlseitig anordenbare Elemente der elektronischen Sitzplatzadressierung gezeigt. In der Regel befindet sich das Feldnetzmodul (160, 170) nicht an einem Stuhl, an dem ein Reihenendmodul (150) angeordnet ist, vgl. hierzu Figur 1.

Nach Figur 1 befindet sich nur beispielhaft vor dem Objektfeld (9) ein Rechner (190) in Form eines Laptops. Der Rechner (190), der auch ein PC, ein PDA oder ein Smartphone sein kann, hat als primäres Ausgabegerät einen Bildschirm (191) und als Eingabegerät (192) z.B. eine Tastatur, eine Maus und/oder einen Touchscreen. An den Rechner - oder ein Netzwerk mit mindestens einem Rechner, z.B. einem Rechner der Hallentechnik - ist z.B. über ein Schnittstellenkabel (199) ein Basisnetzmodul (180) angeschlossen. Letzteres ist bezüglich seiner Elektronik weitgehend baugleich mit einem Feldnetzmodul (160). Ggf. ist das Basisnetzmodul (180) in den Rechner (190) integriert, so dass sich nur die Antenne (189) außerhalb des Rechnergehäuses befindet.

Decken die Objekte (11-14, 211-214) große Aufstellflächen (1) mit sehr großen Feldern oder vielen großen Feldern ab, können auch mehrere Basisnetzmodule (180) verwendet werden. Die Basisnetzmodule (180), die dann miteinander kommunizieren, können z.B. in großen Hallen auch in, neben oder über den Feldern ggf. auch dauerhaft ortsfest installiert werden.

Ziel des vorliegenden Verfahrens ist es, eine Vielzahl von zumindest bereichsweise wenigstens annähernd regelmäßig auf einer Fläche (1) aufgestellten Objekten - im Idealfall - vollautomatisch zu nummerieren. Dabei können die Objekte nach einem bestimmbaren Schema einfach nur durchgezählt werden. In einem anderen Fall sind sie reihen- bzw. zeilenweise aufgestellt und z.B. in einer bestimmten Richtung durchgezählt. Stehen in einem Feld mehrere Reihen versetzt oder unversetzt hintereinander, erhalten die Reihen eigene Reihennummern, die z.B. in den jeweiligen Reihenendmodulen angezeigt werden.

Die Fläche (1), auf der die Objekte aufgestellt sind, ist in der Regel plan. Sie kann aber auch räumlich gekrümmt sein, oder aus ebenen und/oder gekrümmten Partialflächen bestehen, die an ihren Flächenrändern unstetig über eine Knickkante oder einen Absatz - in der Höhe von ein bis fünf Treppenstufen - aneinanderstoßen.

Um eine elektronische Adressierung der oder des Feldes (9) vorzunehmen, werden zunächst viele Stühle (11 - 14) und (211 - 214) nebeneinander aufgestellt. Dabei werden die Stühle nur ggf. über die stuhleigenen Kupplungen (27) miteinander mechanisch gekoppelt. Das Adressierungsverfahren funktioniert auch bei nicht kuppelbaren Stühlen bzw. Objekten. Jede Stuhlreihe (10, 210) kann eine gerade, gekrümmte oder eine kurvige Linie bilden. Der kleinste Krümmungsradius beträgt ca. drei Meter.

Das Adressierungsverfahren teilt sich nach dem Aufstellen oder Ablegen der zu nummerierenden Objekte in drei Phasen auf. Die erste Phase ist die Initialisierungsphase, die zweite eine Korrekturphase und die dritte eine Ansteuerungsphase.

In der Initialisierungsphase erkennen alle im Bereich des oder der Objektfelder angeordneten Feldnetz- und Basisnetzmodule im näheren Umkreis ihre jeweiligen Nachbarfeldnetz- und Basisnetzmodule. Der Radius des Umkreises beträgt in geschlossenen Hallen z.B. 50 - 80 Meter.

Die Feldnetz- und Basisnetzmodule werden in der weiteren Beschreibung teilweise nur als Netzmodule bezeichnet.

Das Erkennen umfasst vier Schritte, die hier an einem expliziten Beispiel erklärt werden. Beispielsweise befinden sich in dem aus Figur 1 bekannten Feld (9) zwei Feldnetzmodule (160, 170), eines in der ersten Reihe (10) und eines in der zweiten Reihe (210). Beide Netzmodule (160, 170) sind einen Meter voneinander entfernt. Das Netzmodul (160) der ersten Reihe (10) hat die individuelle interne Kennung "4A22E6100", eine sog. MAC-Adresse (Media-Access-Control-Adresse). Das Netzmodul (170) der zweiten Reihe (210) hat die Kennung "C412D3100". Das Basisnetzmodul (180) führt die Kennung "9D4EE6100". Es ist vom Netzmodul (160) zwei Meter und vom Netzmodul (170) ca. drei Meter entfernt.

Durch das Starten des rechnergestützten Verfahrens, z.B. durch Starten eines Programms des Rechners (190), werden in einem ersten Schritt alle Netzmodule (160 - 180) aufgefordert, ihre jeweilige Kennung ins Funknetz zu senden. Aus Vereinfachungsgründen wird beim dargestellten Beispiel nach Figur 1 angenommen, dass alle Netzmodule (160 - 180) innerhalb der Reichweitengrenze liegen. Das Netzmodul (160) empfängt die Kennungen "C412D3100" und "9D4EE6100". Das Netzmodul (170) nimmt die Kennungen "4A22E6100" und "9D4EE6100" wahr, während das Basisnetzmodul (180) die Kennungen "4A22E6100" und "C412D3100" registriert.

In einem zweiten Schritt kontaktieren sich alle Module untereinander aufgrund der ausgetauschten Kennungen, um paarweise ihre gegenseitigen räumlichen Abstände auszutauschen. Nahezu zeitgleich und unabhängig hiervon startet jedes Feldnetzmodul (160, 170) über die stuhleigene Elektronik des Trägerstuhls (13, 213) ein Reihenstuhlerkennungsverfahren, dessen erfasste Daten ein Teil der mittels der Module (160, 170) versandten Rücklaufinformation sind.

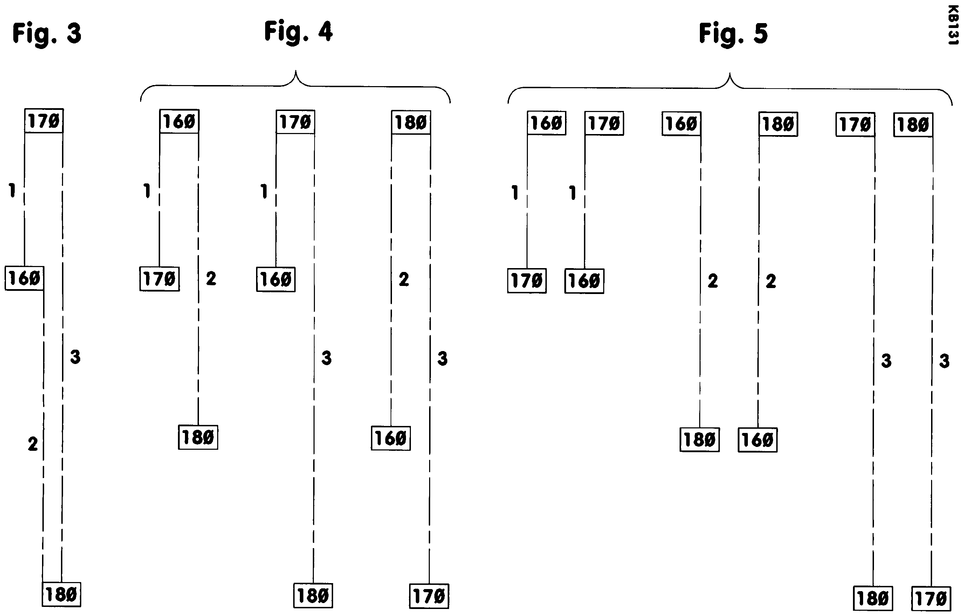

Das Netzmodul (160) stellt fest, dass das Netzmodul (170) ca. ein Meter entfernt ist, während das Netzmodul (180) zu ihm, dem Netzmodul (160), einem Abstand von ca. zwei Metern hat, vgl. Figur 3. Hier sind die Module (160-180) als rechteckige Kästchen und die Abstände als strichpunktierte Linien vereinfacht dargestellt. Das Netzmodul (170) misst zum Netzmodul (180) einen Abstand von ca. drei Meter und zum Netzmodul (160) nur ca. einen Meter. Das Basisnetzmodul (180) ermittelt zum Netzmodul (160) hin einen Abstand von ca. zwei Meter, während seine Abstandsmessung zum Netzmodul (170) ca. drei Meter ergibt.

Die von den Netzmodulen (160 - 180) gemessenen Abstände haben eine Toleranz, die je nach Qualität der verwendeten Hardware im unteren bis mittleren Dezimeterbereich liegt.

In einem dritten Schritt werden alle im Funknetz ausgetauschten Daten über das Basisnetzmodul (180) an den Rechner übertragen. Das Basisnetzmodul (180) wird vom Rechner als Datensammler vorrangig behandelt. Innerhalb des Funknetzes wird seine vorrangige Position erkannt, z.B. durch das Vorhandensein seiner USB-Schnittstelle (188).

Der Rechner bekommt von jedem Netzmodul (160 - 180) eine Rücklaufinformation in Form der eigenen Kennung, der Kennung des erkannten Nachbarmoduls und dem zwischen diesen beiden Modulen erfassten Abstand. Nach Figur 4 erhält der Rechner (190) somit drei Rücklaufinformationen. Das Netzmodul (160) meldet zum eine seine Kennung "4A22E6100" in Verbindung mit dem Datenpaar ("C412D3100"/1 m) des Netzmoduls (170) und zum anderen seine Kennung "4A22E6100" in Verbindung mit dem Datenpaar ("9D4EE6100"/3 m) des Netzmoduls (180). Das Netzmodul (170) liefert die Kennung "C412D3100" verknüpft mit den Datenpaaren ("4A22E6100"/1 m), vgl. Netzmodul (160), und ("9D4EE6100" /3 m), vgl. Netzmodul (180), während das Netzmodul (180) seine Kennung "9D4EE6100" in Verbindung mit den Datenpaaren ("4A22E6100"/2 m) und ("C412D3100"/3 m) überträgt. Für n Netzmodule ergeben sich somit n*(n-1) ermittelte, auswertbare Abstände, wobei jeder Abstand innerhalb einer bestimmten Toleranzgrenze jeweils doppelt vorkommt. Die Hard- und Software der Netzmodule (160 - 180) errechnet die Abstände z.B. u.a. aus den jeweiligen Signallaufzeiten, die zwischen einem korrespondierenden Netzmodulpaar auftreten.

In den Netzmodulen (160 - 180) können auch elektronische Bausteine verwendet werden, die nicht nur die räumlichen Abstände zu ihren Netznachbarn erfassen, sondern auch in welcher Richtung sie liegen, so dass jedes Netzmodul die Polarkoordinaten eines jeden erkannten Netznachbars weitergibt.

In einem vierten Schritt, vgl. Figur 5, sortiert im Rechner (190) eine Auswertesoftware die gelieferten Datensätze nach Abständen. Für jeweils ein Netzmodulpaar (160/170, 160/180, 170/180) werden immer zwei zumindest annähernd vergleichbare Abstände gefunden. Bezogen auf das Netzmodul (180) liegt demnach das Netzmodul (160) in einer Entfernung von zwei Meter, während das Netzmodul (170) drei Meter entfernt liegt. Obwohl die beiden Entfernungen nur Radien von um das Netzmodul (180) angeordneten Kreisen sind, ermittelt die Software, dass die Reihe (10) mit dem Netzmodul (160) vor der Reihe (210) mit dem Netzmodul (170) liegt.

Alle vier Schritte laufen zumindest zeitweise gleichzeitig ab. Die ersten drei Schritte sind beendet, wenn die Auswertesoftware über eine bestimmte Zeitspanne, z.B. 60 Sekunden, keine neuen Datenpaare erhält.

Bei einem Ausführungsbeispiel mit zwei Feldern (9) zu je 100 Stühlen benötigt das gesamte Verfahren - nach dem Aufstellen aller Stühle und dem Verteilen der Module (150 - 180) in und an den beiden Feldern (9) - ca. zwei bis fünf Minuten für das Erfassen und Benummern aller Stühle bzw. Reihenendmodule.

Das zuvor genannte Abbruchkriterium für die ersten drei Schritte kann ersetzt werden durch die Alternative, das Abfragen weiteren Rücklaufinformationen nach z.B. vier Minuten zu beenden. Das Benummern aller Stühle bzw. Reihenendmodule darf dann zusätzlich z.B. noch ein bis drei Minuten dauern. Ggf. können alle hier genannten Zeitspannen durch das Programm der Auswertesoftware abhängig von der Anzahl der schon zurückgemeldeten Netzmodule automatisch angepasst, z.B. erhöht oder verringert, werden.

Innerhalb großer Felder werden die Rücklaufinformationen der weit von dem Basisnetzmodul (180) entfernt gelegenen Feldnetzmodule über andere Feldnetzmodule - sie dienen als Relaisstationen - zum Basisnetzmodul (180) übertragen. Dabei können mehrere Feldnetzmodule sogar übersprungen - also ausgelassen - werden.

Da bei Feldern oder Feldgruppen, bei denen die Anzahl der Feldnetzmodule (160, 170) relativ groß ist, sich viele Feldnetzmodule - aufgrund ihrer großen Reichweite - gegenseitig erkennen, steigt mit zunehmender Modulanzahl die Wahrscheinlichkeit einer fehlerfreien Lage- bzw. Abstandserkennung. Die Anzahl der Feldnetzmodule kann auch dadurch erhöht werden, dass pro Objektreihe - bei entsprechender Anpassung der Felderdarstellungssoftware - zwei oder mehr Module eingesetzt werden.

Die gerade beschriebenen Schritte der Initialisierungsphase beziehen sich ausschließlich auf die mit den Großdistanzsende- und -empfangseinrichtungen (161) ausgestatteten Netzmodule, die letztendlich nur der Erfassung der relativen Lage der Objektreihen (10, 210) dienen. Die einzelnen Objekte (11 - 14, 211 - 214) und deren Lage gegenüber den Modulen (160, 170) ist damit noch nicht bekannt.

Hierfür sind die objekteigenen elektronischen Baugruppen zuständig. Diese sind z.B. in der Anzeigevorrichtung (40) und z.B. in den Kurzdistanzsende- und -empfangseinheiten (50, 60) untergebracht. Über Letztere stehen die Stühle der einzelnen Reihen (10, 210) untereinander z.B. drahtlos in Verbindung.

In der ersten Reihe (10) startet das am Stuhl (13) an dessen - vom Rechner (190) aus betrachtet - linken Kurzdistanzsende- und -empfangseinheit (50) angeordnete Feldnetzmodul (160) die stuhleigene Software.

Der optische Sender (51) der Kurzdistanzsende- und - empfangseinheit (50) übermittelt an den optischen Empfänger (62) des Nachbarstuhles (12) in Form von optischen Signalen einen Datensatz, mit der Aufforderung sich zu identifizieren und weitere Nachbarstühle (11) durch eine entsprechende Signalweitergabe zu erfassen. Die Identifizierung kann sich ggf. auch nur auf das Vorhandensein der Objekte (12, 212) beschränken. Diese optische Signalweitergabe erfolgt so lange, bis der letzte Stuhl (11) der Stuhlreihe (10), sofern er kein Reihenendmodul (150) trägt, auf sein ausgesandtes optisches Signal, innerhalb einer kurzen Zeitspanne, z.B. 200 bis 400 Millisekunden, keine Rückantwort erhält. Das zeitspannengesteuerte Abwarten entfällt, wenn am Reihenendstuhl (11) ein Reihenendmodul (150) aufgesteckt ist. Letzteres quittiert sofort das Erreichen des Stuhlreihenendes.

Von allen links vom Startstuhl (13) stehenden Stühlen (11, 12) wird als Minimalinformation über die Kurzdistanzsende- und - empfangseinheiten (50, 60) dem entsprechenden Funknetzmodul (160) die Anzahl gemeldet. Hier sind das zwei Stühle.

Der gleiche Vorgang findet ausgehend vom Stuhl (13) auch in die andere Richtung statt. Dort meldet sich nur der Stuhl (14). Mit der später in Richtung Basisnetzmodul (180) zu versendenden Rücklaufinformation werden neben dem feldnetzmodultragenden Stuhl (13) zwei links gelegene Stühle (11, 12) und ein rechts gelegener Stuhl (14) registriert. Der gesamte Vorgang des Zählens der reihenweise aufgestellten Stühle wird für jede Objektreihe durchgeführt.

Der Initialisierungsphase folgt die Korrekturphase. Aus den ausgewerteten Rücklaufinformationen errechnet eine Felderdarstellungssoftware einen Lageplan, der das oder die Objektfelder auf dem Bildschirm (191) des Rechners (190) in einer Übersichtszeichnung (200) schematisch wiedergibt, vgl. Figur 1.

Zunächst sind nur die unbenummerten Objekte (11 - 14, 211 - 214) und ihre vorläufige Reihenzählung (4) sichtbar. Bei einer ersten optischen Kontrolle prüft z.B. ein Hallenwart, ob die Reihenzählung plausibel ist. Entsprechend einer eingebbaren Vorgabe sollen z.B. die Reihennummern mit zunehmender Entfernung vom Basisnetzmodul (180) ansteigen. Sind nun z.B. zwei Reihennummern in ihrer Reihenfolge vertauscht, so kann der Hallenwart dies durch eine Tastatureingabe, durch eine Drug- & Drop-Bewegung der Rechnermaus oder eine vergleichbare Fingerkuppen- oder Stiftbewegung auf dem rechnereigenen Touchscreen korrigieren. Aufgrund dieser Korrekturmöglichkeit hat das vorliegende Verfahren einen halbautomatischen Charakter.

Das System kann ggf. auch als reiner Vollautomat verwendet werden. In diesem Fall sind z.B. die Abfolge der Reihen und die Nummerierungsrichtung pro Objektreihe und/oder Objektfeld fest vorgegeben.

Im weiteren halbautomatischen Verfahrensablauf wird u.a. die Nummerierungsrichtung der Objektreihen und das Ein- oder Ausschalten der Displayhintergrundbeleuchtungen eingegeben.

Im Prinzip können alle Funktionen vom Rechner aus angesteuert werden, die von der stuhleigenen Elektronik unterstützt werden. So ist es auch denkbar, den jeweiligen stuhleigenen Displays (45) bestimmbare, individuell verschiedene Beschriftungen, Piktogramme oder Bilder zuzuordnen.

In der anschließenden Ansteuerungsphase werden über das Basisnetzmodul (180) alle Feldnetzmodule (160, 170) angesteuert, um die im Rechner (190) eingestellten Vorgaben und etwaige Steuerfunktionen an die entsprechenden Elektroniken, Displays (45) der Objekte (11 - 14, 211 - 214) und an die Displays (155) der Reihenendmodule (150) weiterzugeben.

Zusätzlich wird nun von den Feldnetzmodulen (160, 170) aus der jeweils erste oder letzte Stuhl (11, 14, 211, 214) einer Reihe (10, 210) iniziiert, die jeweilige Reihe auf- oder absteigend zu nummerieren. Dazu erhält, z.B. bei aufsteigender Nummerierung der jeweils erste Stuhl (11, 211) eine vorgegebene Startnummer, z.B. nach Figur 1 die "1".

Nun sendet der Stuhl (11) seine Nummer "1" über seinen Sender (61) an den benachbarten Stuhl (12). Dessen Elektronik liest über den stuhleigenen Empfänger (52) das optische Signal ein, wandelt es in ein elektrisches um und erhöht die empfangene Nummer um eins auf "2". Die stuhleigene Elektronik wandelt dieses Ergebnis wieder in ein optisches Signal zurück, um es an den nächsten Stuhl (13) weiterzugeben. Diese optische Informationsweitergabe erfolgt solange, bis der letzte Stuhl (14) der Stuhlreihe (10) keine Rückantwort erhält, vgl. Zählvorgang pro Objektreihe.

Die Displays (45) der Stühle (11, 12, 13, 14) zeigen nun die Sitzplatznummern "1", "2", "3" und "4". Somit ist die Sitzplatznummerierung der ersten Stuhlreihe (10) beendet. In vergleichbarer Weise wird die nächste Objektreihe (210) nummeriert.

Wird dem Reihenendstuhl (11) die Startsitzplatznummer "4" zugewiesen und ist eine Abwärtsnummerierung gewählt, zeigen die einzelnen Displays (45) der Stühle (11, 12, 13, 14) einzeln die Sitzplatznummern "4", "3", "2", "1" an.

Zwischenzeitlich werden an den vorderen und/oder den hinteren Reihenendmodulen (150) die im Rechner (190) festgelegten Reihenendnummern (4) ausgegeben. Nach Figur 1 sind das die Nummern "1" und "2" auf der Übersichtszeichnung (200) des Monitor (191). Somit hat jeder Sitzplatz eine aus einer Reihennummer und einer Sitzplatznummer bestimmbaren Adresse. Ggf. können die Reihennummern entfallen, wenn z.B. bei einer kleineren Bestuhlungen die Stühle vollständig durchgezählt werden, beispielsweise wenn an 40 Stühle einzeln die Nummern "1" bis "40" vergeben werden.

Die angezeigte Sitzplatznummer sowie die Reihenendnummer bleiben - unabhängig vom Umstellen der Stühle - bis zu einer gezielten Umprogrammierung erhalten. Ohne Umprogrammierung und ohne Batteriewechsel erlischt die LCD-Anzeige des einzelnen Displays (45, 155) nach ca. fünf Jahren. Solange bleiben, aufgrund des besonders niedrigen Stromverbrauchs der Elektronikbauteile, trotz Nummernanzeige, die Infrarotempfänger empfangsbereit.

Dies gilt nicht für die Netzmodule (160-180). Sie benötigen aufgrund der erforderlichen Funksendeleistung mehr Strom. Ggf. werden auch die Netzmodule mit einem Standby-Modus ausgestattet, der sich automatisch nach dem Empfang der den Objekten zugewiesenen Informationen einstellt.

Bei dieser Erfindung ist ein Stuhl vergleichbar mit einem Sitzplatz. Demnach können z.B. auf einem langen Untergestell eine Vielzahl von Sitzschalen nebeneinander befestigt sein, wobei jede Sitzschale die Anzeigevorrichtung, die Stromversorgung, die Auswerte- bzw. Recheneinheit und die Sende- und Empfangsvorrichtungen aufweist.

Die Figurenbeschreibung befasst sich nur mit einer Stuhladressierung. Selbstverständlich kann das System auch - neben den in der Beschreibungseinleitung schon genannten Objekte - auf in Feldern (9) anzuordnende nummerierbare andere, z.B. temporär aufgestellte Objekte, wie z.B. Kunstwerke, Ausstellungsstücke und dergleichen übertragen werden. Hierfür sind dann die Sendereichweiten der optischen Sender entsprechend anzupassen.

### Bezugszeichenliste:

- 1: Bodenfläche, Aufstellfläche
- 4: Objektreihennummer, Reihennummer, Reihenzählung
- 5: Objektnummer, Platznummer, Sitzplatznummer
- 6: niedrigste Platznummer der 1. Reihe (10)
- 7: höchste Platznummer der 1. Reihe (10)
- 9: Feld, Objektfeld, Stuhlfeld

- 10: Objektreihe, Stuhlreihe, erste
- 11: erstes Objekt, erster Stuhl, erster Sitzplatz, Reihenendstuhl
- 12: zweites Objekt, zweiter Stuhl, zweiter Sitzplatz
- 13: drittes Objekt, dritter Stuhl, dritter Sitzplatz
- 14: viertes Objekt, vierter Stuhl, vierter Sitzplatz, Reihenendstuhl
- 18: Stuhlreihenende, vorn
- 19: Stuhlreihenende, hinten

- 21: Sitzfläche
- 22: Rückenlehne, Stuhllehne
- 23: Stuhlbeine
- 25: Aussparung
- 27: Kupplung, rein mechanisch
- 28, 29: Kupplungselemente; links, rechts

- 31: linke Stuhlseite
- 32: rechte Stuhlseite

- 40: Anzeigevorrichtung
- 41: Gehäuse
- 42: Deckelblende
- 43: Flanschplatten
- 44: Öffnung
- 45: Display, Anzeigeeinheit
- 48: Rechen- und Auswerteeinheit, objekteigene Elektronik
- 49: Flachkabel

- 50, 60: Kurzdistanzsende- und -empfangseinheit, Infrarot-Transceiver, objekteigene Elektronik
- 51, 61: optischer Sender
- 52, 62: optischer Empfänger
- 55, 65: Signallichtstrahlen, strichpunktiert
- 57: Montagenut, hier beidseitig

- 80: Stromversorgung

- 150: Reihenendmodul, Reihensende- und Empfangseinheit
- 152: optischer Sender, Signalsender, auf Rückseite
- 153: optischer Empfänger, Signalempfänger, auf Rückseite

- 154: Anzeigevorrichtung
- 155: Display
- 157: Montagesteg

- 160: Feldnetzmodul, 1. Reihe (10); Netzmodul
- 161: Großdistanzsende- und -empfangseinrichtung, Funksender und Funkempfänger, Elektronik
- 162: Rechen- und Auswerteeinheit, Elektronik
- 163: Stromversorgung
- 164: Montagesteg
- 165: Kurzdistanzsender
- 166: Kurzdistanzempfänger
- 167: Kurzdistanzsender
- 168: Kurzdistanzempfänger
- 169: Antenne

- 170: Feldnetzmodul, 2. Reihe (210); Netzmodul

- 180: Basisnetzmodul; Netzmodul
- 188: Schnittstelle, USB-Anschluss, kabelgestützt; Schnittstelle, drahtlos
- 189: Antenne

- 190: Rechner, Desktop, Laptop, PAL, Smartphone
- 191: Monitor, Bildschirm, Ausgabeeinrichtung, primär
- 192: Eingabeeinrichtung, Tastatur, Maus, Touchscreen
- 199: Schnittstellenkabel

- 200: Übersichtszeichnung, Felderplan

- 210: Objektreihe, Stuhlreihe, zweite
- 211: erstes Objekt, erster Stuhl, erster Sitzplatz, Reihenendstuhl
- 212: zweites Objekt, zweiter Stuhl, zweiter Sitzplatz
- 213: drittes Objekt, dritter Stuhl, dritter Sitzplatz
- 214: viertes Objekt, vierter Stuhl, vierter Sitzplatz, Reihenendstuhl

## Patentansprüche

1. Verfahren zur vollautomatischen oder halbautomatischen Adressierung von in einem oder mehreren Objektfeldern (9) aufstellbaren, nummerierbaren Objekten (11 - 14, 211 - 214),
- wobei die Objektfelder (9) aus einer oder mehreren Objektreihen (10, 210) bestehen,
- wobei jede Objektreihe (10, 210) mindestens ein Objekt (11 - 14, 211 - 214) umfasst,
- wobei jedes Objekt (11 - 14, 211 - 214) mindestens eine Anzeigeeinheit (45), mindestens eine Rechen- und Auswerteeinheit (48) und mindestens eine Stromversorgung (80) aufweist,
- wobei jedes Objekt (11 - 14, 211 - 214) - zum Empfang und zur Darstellung einer Objektplatznummer oder anderer Informationen und zur Weitergabe einer berechneten Objektplatznummer oder anderer Informationen - entweder mindestens zwei Kurzdistanzsender (51, 61) und mindestens zwei Kurzdistanzempfänger (52, 62) oder zwei drahtgestützte Adapter aufweist,
- wobei jede Objektreihe (10, 210) eine bestimmte Anzahl von Feldnetzmodulen (160, 170) umfasst, die zwischen einem Feldnetzmodul (160, 170) und einem Fünftel der Anzahl der Objekte (11 - 14, 211 - 214) liegt,
- wobei jedes Feldnetzmodul (160, 170) mindestens eine Rechen- und Auswerteeinheit (162), mindestens eine Stromversorgung (163) sowie mindestens eine Großdistanzsende- und - empfangseinrichtung (161) aufweist,
- wobei im oder in der Nähe des oder der Objektfelder (9) mindestens ein einem Feldnetzmodul (160, 170) vergleichbares Basisnetzmodul (180) angeordnet ist, das an einen mit mindestens einem Monitor (191) und mindestens einer Eingabeeinrichtung (192) ausgestatteten Rechner (190) drahtlose oder kabelgestützte Datenschnittstelle (188) verbunden ist oder im Rechner (190) - zumindest teilweise - integriert ist,
- wobei jedes Feldnetzmodul (160, 170) nach einem Systemstart zumindest einen Teil seiner benachbarten Feldnetzmodule (160, 170) - einschließlich dem oder der Basisnetzmodule (180) - mittels der Großdistanzsende- und - empfangseinrichtung (161) individuell erkennt und zu jeden eindeutig erkannten Feldnetz- und/oder Basisnetzmodul (160 - 180) zumindest den räumlichen Abstand und die Richtung ermittelt,
- wobei die Kennung des jeweiligen Netzmoduls (160 - 180) zusammen mit der entsprechenden Abstands- und Richtungsinformation als Rücklaufinformation mittels der Großdistanzsende- und -empfangseinrichtung (161) an alle anderen unmittelbar erreichbaren Feldnetzmodule (160, 170) und/oder das oder die Basisnetzmodule (180) übertragen wird,
- wobei die Feldnetzmodule (160, 170) innerhalb einer vorgegebenen Zeitspanne ihre Rücklaufinformationen - an das oder die Basisnetzmodule (180) übertragen,
- wobei im Rechner (190) aus den Rücklaufinformationen ein manuell editierbarer Felderplan (200) erstellt wird, in dem allen Objekten (11 - 14, 211 - 214) Reihen- (4) und Platznummern (5) und andere Informationen zugewiesen werden, und
- wobei die zugewiesenen Reihen- (4) und Platznummern (5) oder die diesen zugewiesenen anderen Informationen sowie Reihen- und/oder Platzbezeichnungen mittels der Großdistanzsende- und -empfangseinrichtung (161) von der oder den Basisnetzstationen (180) aus an die Feldnetzmodule (160, 170) übertragen werden, um dort entweder mittels der Kurzdistanzsender (51, 61) und -empfänger (52, 62) oder der drahtgestützten Adapter an die Anzeigeeinheiten (40, 154) der Objekte (11 - 14, 211 - 214) der Objektreihen (10, 210) übermittelt zu werden.

2. System zur Durchführung des Verfahrens gemäß Anspruch 1 zur vollautomatischen oder halbautomatischen Adressierung von in einem oder mehreren Objektfeldern (9) aufstellbaren, nummerierbaren Objekten (11 - 14, 211 - 214),
- wobei die Objektfelder (9) aus einer oder mehreren Objektreihen (10, 210) bestehen,
- wobei jede Objektreihe (10, 210) mindestens ein Objekt (11 - 14, 211 - 214) umfasst,
- wobei jedes Objekt (11 - 14, 211 - 214) - zum Empfang und zur Darstellung einer Objektplatznummer oder anderer Informationen und zur Weitergabe einer berechneten Objektplatznummer oder anderer Informationen - mindestens eine Anzeigeeinheit (45), mindestens eine Rechen- und Auswerteeinheit (48), mindestens eine Stromversorgung (80), sowie entweder mindestens zwei Kurzdistanzsender (51, 61) und mindestens zwei Kurzdistanzempfänger (52, 62) oder mindestens zwei drahtgestützte Adapter aufweist,
- wobei jede Objektreihe (10, 210) eine bestimmte Anzahl von Feldnetzmodulen (160, 170) umfasst, die zwischen einem Feldnetzmodul (160, 170) und einem Fünftel der Anzahl der Objekte (11 - 14, 211 - 214) liegt,
- wobei im oder in der Nähe des oder der Objektfelder (9) mindestens ein einem Feldnetzmodul (160, 170) vergleichbares Basisnetzmodul (180) angeordnet ist, das an einen mit einem Monitor (191) und einer Eingabeeinrichtung (192) ausgestatteten Rechner (190) angeschlossen ist oder in Letzterem - zumindest teilweise - integriert ist,
- wobei jedes Feld- und Basisnetzmodul (160 - 180) - zum Empfang und zur Weitergabe von Rücklaufinformationen, die mindestens aus den internen Objektkennungen erfasster benachbarter Feld- und Basisnetzmodulen (160 - 180) und mindestens aus deren räumlichen Abstand und deren Richtung zu den erfassten benachbarten Feld- und Basisnetzmodule (160 - 180) bestehen - mindestens eine Rechen- und Auswerteeinheit, mindestens eine Stromversorgung sowie mindestens eine Großdistanzsende- und -empfangseinrichtung (161) aufweist.

3. System gemäß Anspruch 2, **dadurch gekennzeichnet, dass** die Großdistanzsende- und -empfangseinrichtungen (161) der Feld- und Basisnetzmodule (160 - 180) in Gebäuden eine Reichweite von 50 bis 80 Meter aufweisen.

4. System gemäß Anspruch 2, **dadurch gekennzeichnet, dass** jeweils ein Kurzdistanzsender (51, 61) und ein Kurzdistanzempfänger (52, 62) zu einer Kurzdistanzsende- und - empfangseinheit (50, 60) zusammengefasst sind.

5. System gemäß Anspruch 2, **dadurch gekennzeichnet, dass** die Kurzdistanzsender (51, 61) der Kurzdistanzsende- und - empfangseinheiten (50, 60) eine maximale Reichweite einer im Durchschnitt halben Objektbreite oder eines halben Objektdurchmessers haben.

6. System gemäß Anspruch 2, **dadurch gekennzeichnet, dass** mindestens ein Basisnetzmodul (180) eine drahtgestützte Schnittstelle (188) aufweist.

7. System gemäß Anspruch 2, **dadurch gekennzeichnet, dass** jede Objektreihe mindestens ein Reihenendmodul (150) mit einer Anzeigeeinheit (155) umfasst.

8. System gemäß Anspruch 2, **dadurch gekennzeichnet, dass** jedes Reihenendmodul (150) eine Stromversorgung und mindestens einen Kurzdistanzempfänger (153) aufweist.

## Claims

1. A method of fully or semi-automatically addressing numberable objects (11 - 14, 211 - 214) suited to be assembled to form one or more fields of objects (9),
- the object fields (9) consisting of one or more rows of objects (10, 210),
- each row of objects (10, 210) comprising at least one object (11 - 14, 211 - 214),
- each object (11 - 14, 211 - 214) including at least one display unit (45), at least one computing and evaluating unit (48) and at least one power supply (80),
- each object (11 - 14, 211 - 214) comprising either at least two short-distance transmitters (51, 61) and at least two short-distance receivers (52, 62) or two wire-connected adapters for receiving and displaying an object position number or other information and for passing on a computed object position number or other information,
- each row of objects (10, 210) comprising a predetermined number of field network modules (160, 170), said number lying between a field network module (160, 170) and one fifth of the number of objects (11 - 14, 211 - 214), and with
- the field network modules (160, 170) each comprising at least one computing and evaluating unit (162), at least one power supply (163) and at least one long-distance transmitting and receiving unit (161),
- with at least one base network module (180) comparable to a field network module (160, 170) arranged in or near said one or more object fields (9), the base network module connected with a computer (190) through a wireless or wire-connected data interface (188) or integrated - at least partly - in computer (190), said computer (190) equipped with at least one monitor (191) and at least one input unit (192),
- with each field network module (160, 170), as the system starts, individually recognizing at least several of its neighbouring field network modules (160, 170) - including said one or more base network modules (180) -, said recognizing taking place by means of said long-distance transmitting and receiving units (161), and determining at least the spatial distance from and the direction to each unambiguously recognized field and/or base network module (160 - 180),
- with the ID code of each respective network module (160 - 180) and the corresponding distance and direction information transmitted by means of the long-distance transmitting and receiving unit (161) as feedback information to all other directly reachable field network modules (160, 170) and/or the one or more base network modules (180),
- with the field network modules (160, 170) transmitting their feedback information to the one or more base network modules (180) within a predetermined period of time,
- with the computer (190) generating from said feedback information a manually editable field plan (200) in which all objects (11 - 14, 211 - 214) have row numbers (4) and place numbers (5) and other information assigned to them, and
- said assigned row numbers (4) and place numbers (5), as well as said other information assigned to them, as well as row and/or place designations, being transmitted by means of the long-distance transmitting and receiving unit (161) from the one or more base network stations (180) to the field network modules (160, 170) in order to be passed on by means of the short-distance transmitters (51, 61), the short-distance receivers (52, 62) or said wire-connected adapters to the display units (40, 154) at the objects (11 - 14, 211 - 214) of the rows of objects (10, 210).

2. A system for proceeding the method according to claim 1 for fully or semi-automatically addressing numberable objects (11 - 14, 211 - 214) suited to be assembled to form one or more fields of objects,
- the object fields (9) consisting of one or more rows of objects (10, 210),
- each row of objects (10, 210) comprising at least one object (11 - 14, 211 - 214),
- each object (11 - 14, 211 - 214) including at least one display unit (45), at least one computing and evaluating unit (48) and at least one power supply (80), as well as either at least two short-distance transmitters (51, 61) and at least two short-distance receivers (52, 62) or two wire-connected adapters for receiving and displaying an object position number or other information and for passing on a computed object position number or other information,
- each row of objects (10, 210) comprising a predetermined number of field network modules (160, 170), said number lying between a field network module (160, 170) and one fifth of the number of objects (11 - 14, 211 - 214), and with
- at least one base network module (180) comparable to a field network module (160, 170) being located in or near said one or more object fields (9), said base network module connected with a computer (190) through a wireless or wire-connected data interface (188) or integrated - at least partly - in said computer and said computer (190) equipped with at least one monitor (191) and at least one input unit (192),
- with each field network module (160, 170), as the system starts, individually recognizing at least a plurality of its neighbouring field network modules (160, 170) including said one or more base network modules (180), said recognizing taking place by means of said long-distance transmitting and receiving units (161), and determining at least the spatial distance from and the direction to each unambiguously recognized field and/or base network module (160-180), and
- with each field and base network module (160 - 180) comprising at least one computing and evaluating unit, at least one power supply and at least one long-distance transmitting and receiving unit (161) for receiving and passing on feedback information comprising at least the internal object ID codes of recognized mutually adjacent field and base network modules (160 - 180) and at least their spatial distances and their directions to said recognized neighbouring field and base network modules (160 - 180).

3. System as claimed in claim 2, **characterized in that** the long-distance transmitting and receiving units (161) of the field and base network modules (160 - 180) have a range of 50 to 80 meters inside buildings.

4. System as claimed in claim 2, **characterized in that** one short-distance transmitter (51, 61) is assembled with one associated short-distance receiver (52, 62) to form one short-distance transmitting and receiving unit (50, 60).

5. System as claimed in claim 2, **characterized in that** the short-distance transmitters (51, 61) of the short-distance transmitter and receiver unit (50, 60) have a maximum range equivalent on the average to one half of the width or of one half of the diameter of an object diameter.

6. System as claimed in claim 2, **characterized in that** at least one base network module (180) includes a wire-connected interface (188).

7. System as claimed in claim 2, **characterized in that** each row of objects comprises at least one end-of-row module (150) including a display unit (155).

8. System as claimed in claim 2, **characterized by** each end-of-row module (150) comprising a power supply and at least one short-distance receiver (153).

## Revendications

1. Procédé pour l'adressage entièrement automatique ou semi-automatique d'objets numérotables (11 - 14, 211 - 214) placés dans un ou plusieurs champs d'objets (9),
- les champs d'objets (9) étant composés d'un ou de plusieurs rangées d'objets (10, 210),
- chaque rangée d'objets (10, 210) comprenant au moins un objet (11 - 14, 211 - 214),
- chaque objet (11 - 14, 211 - 214) ayant au moins une unité d'affichage (45), au moins une unité de calcul et d'analyse (48) et au moins une alimentation en électricité (80),
- chaque objet (11 - 14, 211 - 214) étant équipé - pour la réception et l'affichage d'un numéro de place d'un objet ou d'autres informations et pour la transmission d'un numéro de place calculé d'un objet ou d'autres informations - soit au moins de deux émetteurs courte distance (51, 61) et au moins de deux récepteurs courte distance (52, 62) soit de deux adaptateurs filaires,
- chaque rangée d'objets (10, 210) comprenant un certain nombre de modules de réseau de terrain (160, 170) allant d'un module de réseau de terrain (160, 170) à un cinquième du nombre des objets (11 - 14, 211 - 214),
- chaque module de réseau de terrain (160, 170) comprenant au moins une unité de calcul et d'analyse (162), au moins une alimentation en électricité (163) et au moins une l'installation d'émission et de réception grande distance (161),
- dans le champ ou à proximité du ou des champs d'objets (9) étant disposé au moins un module de réseau de base (180) comparable à un module de réseau de terrain (160, 170) qui est connecté au moyen d'une interface de données sans fil ou à fil (188) à un ordinateur équipé d'au moins un écran (191) et d'au moins un moyen d'entrée (192) ou qui est intégré, au moins en partie, dans l'ordinateur,
- après un démarrage du système chaque module de réseau de terrain (160, 170) identifiant individuellement au moins une partie de ses modules de réseau de terrain voisins (160, 170) - y compris le ou les modules de réseau de base (180) - au moyen des émetteurs et récepteurs grande distance (161) et déterminant au moins la distance d'écartement et la direction par rapport à chaque module de réseau de terrain et/ou de réseau de base (160, 180) identifié de manière sans équivoque,
- l'identifiant de chaque module de réseau (160 - 180) étant transmis comme information retour au moyen de l'installation d'émission et de réception grande distance (161), avec l'information correspondante relative à la distance et à la direction, à tous les autres modules de réseau de terrain (160, 170) en contact direct et/ou au(x) module(s) de réseau de base (180),
- les modules de réseau de terrain (160, 170) transmettant leurs informations retour au(x) module(s) de réseau de base (180) en un laps de temps prédéfini,
- un plan de champs (200) manuellement éditable étant établi par l'ordinateur (190) à partir des informations retour dans lequel des numéros de rangée (4) et de place (5) et d'autres informations sont attribués à tous les champs (11 - 14, 211 - 214) et
- les numéros de rangée (4) et de place (5) attribués ou les autres informations attribuées à ces numéros ainsi que des désignations de rangée et/ou de place étant transmis depuis la ou les stations de réseau de base (180) au moyen de l'installation d'émission et de réception grande distance (161) aux modules de réseau de champ (160, 170), pour y être transmis aux unités d'affichage (40, 154) des objets (11 - 14, 211 - 214) des rangées d'objet (11, 210) au moyen des émetteurs (51, 61) et récepteurs (52, 62) courte distance (51, 61) ou des adaptateurs filaires.

2. Système pour la mise en oeuvre du procédé selon la revendication 1 pour l'adressage entièrement automatique ou semi-automatique d'objets numérotables (11 - 14, 211 - 214) placés dans un ou plusieurs champs d'objets (9),
- les champs d'objets (9) étant composés d'un ou de plusieurs rangées d'objets (10, 210),
- chaque rangée d'objets (10, 210) comprenant au moins un objet (11 - 14, 211 - 214),
- chaque objet (11 - 14, 211 - 214) comportant - pour la réception et l'affichage d'un numéro de place d'un objet ou d'autres informations et pour la transmission d'un numéro de place calculé d'un objet ou d'autres informations - au moins une unité d'affichage (45), au moins une unité de calcul et d'analyse (48), au moins une alimentation en électricité (80) ainsi qu'au moins deux émetteurs courte distance (51, 61) et au moins deux récepteurs courte distance (52, 62) ou au moins deux adaptateurs filaires,
- chaque rangée d'objets comprenant un certain nombre de modules de réseau de terrain (160, 170) allant d'un module de réseau de terrain (160, 170) à un cinquième du nombre des objets (11 - 14, 211 - 214),
- dans le champ ou à proximité du ou des champs d'objets (9) étant disposé au moins un module de réseau de base (180) comparable à un module de réseau de terrain (160, 170) qui est connecté à un ordinateur équipé d'un écran (191) et d'un moyen d'entrée de données (192) ou qui est intégré, au moins en partie, dans l'ordinateur,
- chaque module de réseau de champ ou de réseau de base (160 - 180) - pour la réception de la transmission d'informations de retour comprenant au moins les identifications internes d'objets de modules de champs et de réseau de base (160 - 180) saisies et au moins leur distance d'écartement et leur direction par rapport aux modules de champs et aux modules de réseau de base voisins saisis (160, 180) - étant composé d'au moins une unité de calcul et d'analyse, d'au moins une alimentation en électricité ainsi que d'au moins une installation d'émission et de réception grande distance (161).

3. Système selon la revendication 2, **caractérisé en ce que** les émetteurs et récepteurs grande distance (161) des modules de réseau de terrain et des modules de réseau de base (160, 180) ont une portée de 50 à 80 mètres dans des bâtiments.

4. Système selon la revendication 2, **caractérisé en ce qu'**un émetteur courte distance (51, 61) et un récepteur courte distance (52, 62) sont toujours regroupés en une unité émettrice-réceptrice (50, 60).

5. Système selon la revendication 2, **caractérisé en ce que** les émetteurs courte distance (51, 61) des unités émettrices-réceptrices (50, 60) ont une portée maximale correspondant en moyenne à la moitié de la largeur d'un objet ou à la moitié du diamètre d'un objet.

6. Système selon la revendication 2, **caractérisé en ce qu'**au moins un module de réseau de base (180) est équipé d'une interface à fil (188).

7. Système selon la revendication 2, **caractérisé en ce que** chaque rangée d'objets comporte au moins un module de fin de rangée (150) avec une unité d'affichage (155).

8. Système selon la revendication 2, **caractérisé en ce que** chaque module de fin de rangée (150) est équipé d'une alimentation en électricité et d'au moins un récepteur courte distance (153).
